# EUROPEAN PATENT APPLICATION

(11) **EP 4 712 313 A1**
(43) Date of publication of application: **18.03.2026**
(21) Application number: 24200479.4
(22) Date of filing: 16.09.2024
(51) Int. Cl.: H02K 1/32, H02K 9/19

(54) **ELECTRIC DRIVE UNIT WITH IMPROVED ROTOR COOLING SYSTEM**

(71) Applicant: Valeo eAutomotive Germany GmbH, 91056 Erlangen (DE)
(72) Inventor: KESSLER, Bernhard, 97616 Bad Neustadt a.d. Saale (DE); SPIRK, Daniel, 97616 Bad Neustadt a.d. Saale (DE); SÖNTGERATH, Philipp, 97616 Bad Neustadt a.d. Saale (DE); TORRES-RIMENEZ, Ricardo, 78395 San Luis Potosi (MX)
(74) Representative: Valeo Powertrain Systems

(57) **Abstract**

An electric drive unit (1) is disclosed, which comprises an electric machine (2) with a stator (7) and a rotor (10) with a hollow rotor shaft (11a..11c). Moreover, the electric drive unit (1) comprises a drive shaft (15a..15c) running through an axial bore of the rotor shaft (11a..11c) and a rotor cooling system (16a..16c) designed to spray a coolant into a gap (B) between the rotor shaft (11a..11c) and the drive shaft (15a..15c) at an axial end (C1) of the rotor shaft (11a..11c). Further on, a method of cooling such an electric drive unit (1) is disclosed. Finally, a vehicle (34) with such an electric drive unit (1) is disclosed.

## Description

### TECHNICAL FIELD

The invention relates to an electric drive unit, which comprises an electric machine with a stator and a rotor having a hollow rotor shaft. Moreover, the electric drive unit comprises a drive shaft running through an axial bore of the rotor shaft. In addition, the invention relates to a method of operating such an electric drive unit and to a vehicle with an electric drive unit of said kind, which is provided for propelling the vehicle.

### BACKGROUND ART

An electric drive unit, a method and a vehicle of the above kinds are generally known. In some electric drive units a drive shaft reaches through the hollow rotor shaft, for example, when compact designs are needed. However, cooling the rotor of the electric machine gets a challenging task then because in common designs a coolant is pumped into an axial bore of the rotor shaft by means of a centric connector. As is easily concievable, such a solution is not possible if the drive shaft seizes this position.

### DISCLOSURE OF INVENTION

Accordingly, an object of the invention is to provide an improved electric drive unit, an improved method of operating such an electric drive unit and an improved vehicle. In particular, a solution shall be proposed, which allows to cool the rotor although a position for a possible centric coolant connector is seized by a drive shaft running through the rotor shaft.

The object of the invention is solved by an electric drive unit as disclosed in the opening paragraph, wherein the rotor cooling system is designed to spray a coolant into an (annular) gap between the rotor shaft and the drive shaft at an axial end of the rotor shaft or at a coolant inlet region respectively.

Moreover, the invention is solved by a method of cooling an electric drive unit of said kind, wherein a coolant is sprayed into the gap by the rotor cooling system and the coolant flows axially in, along or through the axial bore. For this reason, the coolant can be pumped through the rotor cooling system of the electric machine, for example, by means of a coolant pump, wherein the rotor cooling system and the coolant pump are parts of a cooling circuit.

Finally, the object of the invention is solved by a vehicle with an electric drive unit of said kind, which is provided for propelling the vehicle.

By the proposed measures, the rotor can be cooled although a position for a centric coolant connector is seized by the drive shaft running through the rotor shaft.

Generally, the drive shaft can rotate independently of the rotor shaft or at least may rotate in a different way. The drive shaft, for example, may be a shaft of a gear coupled to the electric machine.

In particular, the coolant can be sprayed into the gap in a contactless manner, i.e. without the use of a sealing. In this way, a power loss based on a friction force in a sealing of the rotor cooling system arranged on the rotor shaft can be avoided. Accordingly, the efficiency of the electric machine can be increased.

Generally, the axial flow of the coolant may purely be caused by the pressure or velocity of the coolant sprayed into the gap. However, the annular gap may comprise an outer border surface on the inner side of the hollow rotor shaft, which axially extends from the coolant inlet region to a distant region, wherein the outer border surface is radially more outwards at the distant region than at the coolant inlet region. In this way, the axial flow of the coolant is caused or supported by a rotation of the hollow rotor shaft (strictly speaking by the centrifugal force acting on the coolant then).

Alternatively or in addition, the axial bore of the rotor shaft can comprise an annular narrowing positioned at the axial end of the rotor shaft. In other words, the outer border surface of the annular gap can comprise a first annular step at the coolant inlet region opening from the coolant inlet region to the distant region. By these measures, the coolant is hindered from flowing out of the rotor cooling system at this axial end of the rotor shaft. Instead of this, the coolant flows axially in the axial bore, in the direction of the opposite end of the rotor shaft. In other words, the coolant flows axially through or along the axial bore.

Alternatively or in addition, the axial bore of the rotor shaft can comprise a conical section. In other words, the outer border surface of the annular gap can be conical opening from the coolant inlet region to the distant region. Again, the coolant is hindered from flowing out of the rotor cooling system by these measures.

The annular gap can also comprise an end region axially vis-à-vis of the coolant inlet region, wherein the outer border surface axially extends further from the distant region to the end region and wherein the outer border surface is radially more outwards at the distant region than at the end region. Accordingly, the axial bore of the rotor shaft can comprise an annular narrowing positioned at the second axial end of the rotor shaft or in other words, the outer border surface can comprise a second annular step at the end region opening from the end region to the distant region. Alternatively or in addition, the axial bore of the rotor shaft can comprise a second conical section or in other words, the outer border surface can conically open from the end region to the distant region.

Beneficially, a height of the first annular step and/or a height of the second annular step can be in a range of 0.5 mm to 2.0 mm.

As said, in the above cases, the axial flow of the coolant can be caused or supported by a rotation of the hollow rotor shaft (strictly speaking by the centrifugal force acting on the coolant then).

It should be noted that the coolant used in the electric drive unit is not limited to only cool the electric machine but may also have a lubrication function and can be used to lubricate parts of the electric machine. In particular, the coolant may be or comprise oil.

Further advantageous embodiments are disclosed in the claims and in the description as well as in the figures.

In a preferred embodiment, the rotor shaft can comprise a radial bore, which connects the axial bore with an interior space of the electric machine. In other words, the one or more radial bores may start at the distant region and exit to an interior space within the electric machine, in which interior space the stator and the rotor are arranged. By these measures, the coolant may leave the annular gap between the rotor shaft and the drive shaft and cool further parts of the electric machine and/or flow to an oil sump for example. In particular, the at least one radial bore at its exit to the interior space can be directed to a rotor winding head and/or a stator winding head of the electric machine and cool the same accordingly. More particularly, the axial bore of the rotor shaft can comprise an annular groove, from which the radial bore starts. In this way, distribution of the coolant into the one or more radial bores is supported.

Advantageously, the rotor cooling system can comprise a first coolant channel, which runs around the drive shaft and comprises nozzles directed to the annular gap. In this way, the coolant can easily be sprayed into the gap between the rotor shaft and the drive shaft. Beneficially, the first coolant channel may axially be spaced from the axial end of the rotor shaft or the coolant inlet region respectively. As already mentioned, the coolant can be sprayed into the gap in a contactless manner, i.e. without the use of a sealing. Further on, in particular, the first coolant channel can be annular, wherein the first coolant channel is not necessarily circular but may have a polygonal shape for example.

Advantageously, the nozzles may have an angular orientation with respect to the rotation axis of the rotor shaft and the drive shaft and may be directed inwards onto the rotor shaft. By this measure, the coolant is sprayed onto the drive shaft and may be transferred from there to the rotor shaft by rotation of the drive shaft, i.e. by the centrifugal force acting on the coolant then.

In yet another advantageous embodiment, the rotor cooling system can comprise a second coolant channel which connects the first coolant channel with a third coolant channel arranged in a stator housing of the electric machine. In this way, the electric drive unit may have a common stator and rotor cooling system.

Beneficially, the first coolant channel and/or the second coolant channel each can be formed by a pipe. In this way, the first coolant channel and/or the second coolant channel particularly can be manufactured in an easy way and can be attached to existing housings of the electric machine. In particular, the pipe at least partially can be arranged outside the stator housing of the electric machine. So, no coolant channel or a channel for the pipe is necessary within the stator housing.

Finally, the third coolant channel can comprise a balancing element or narrowing, which is designed to balance a coolant flow from the third coolant channel into the second coolant channel.

### BRIEF DESCRIPTION OF DRAWINGS

The invention now is described in more detail hereinafter with reference to particular embodiments, which the invention however is not limited to.
- Fig. 1: shows a half sectional view of an exemplary electric machine;
- Fig. 2: shows an embodiment of a stator housing with a rotor pipe arrangement in oblique view;
- Fig. 3: shows a sectional view of an arrangement with the stator housing and the rotor pipe arrangement depicted in Fig. 2;
- Fig. 4: shows a detailed view of Fig. 3;
- Fig. 5: shows the rotor pipe arrangement depicted in Figs. 2 to 4 from the back side;
- Fig. 6: shows a schematic sectional view of a cooling arrangement with two annular narrowings and two conical sections and
- Fig. 7: shows a schematic view of an electric vehicle.

### DETAILED DESCRIPTION

Generally, same parts or similar parts are denoted with the same/similar names and reference signs. The features disclosed in the description apply to parts with the same/similar names respectively reference signs. Indicating the orientation and relative position is related to the associated figure.

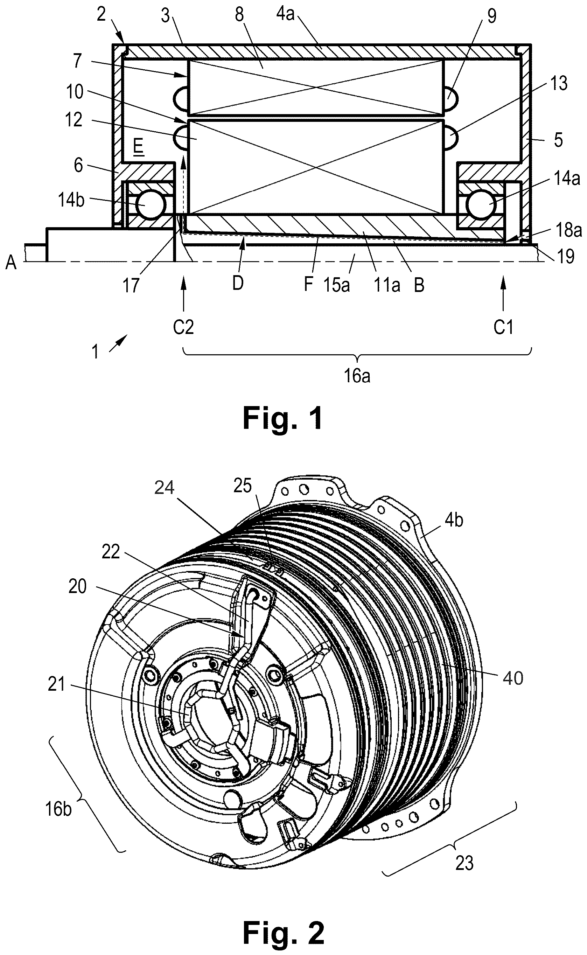

Fig. 1 shows a schematic cross sectional view of an exemplary electric drive unit 1, which comprises an electric machine 2 with a machine housing 3, wherein the machine housing 3 has a stator housing 4a, a first bearing shield 5 and a second bearing shield 6. Further on, the electric machine 2 comprises a stator 7, which is arranged in the stator housing 4a and which has a stator lamination stack 8 with a plurality of stator laminations stacked over one another (not shown in detail in Fig.1). In addition, the stator 7 comprises stator windings, of which stator winding heads 9 are visible in Fig. 1. Moreover, the electric machine 2 comprises a rotor 10, which is rotatably arranged in the machine housing 3 around a rotor axis or stator axis A. The rotor 10 comprises a hollow rotor shaft 11a and a rotor lamination stack 12 mounted thereon, wherein the rotor lamination stack 12 comprises a plurality of rotor laminations stacked over one another (not shown in detail in Fig.1 either). In addition, the rotor 10 comprises rotor windings, of which rotor winding heads 13 are visible in Fig. 1. Alternatively, the rotor 10 may also have rotor magnets instead of rotor windings. In detail, the rotor shaft 11a is rotatably supported by means of (roller)bearings 14a, 14b, which are arranged in the bearing shields 5 and 6.

The electric drive unit 1 moreover comprises a drive shaft 15a running through an axial bore of the hollow rotor shaft 11a, wherein the drive shaft 15a is rotatable independently of the rotor shaft 11a or at least may rotate in a different way and wherein an (annular) gap B is formed between the rotor shaft 11a and the drive shaft 15a. The drive shaft 15a, for example, may be a shaft of a gear coupled to the electric machine 2.

The electric drive unit 1 additionally comprises a rotor cooling system 16a for cooling the rotor 10 of the electric machine 2, wherein the rotor cooling system 16a is designed to spray a coolant into the gap B between the rotor shaft 11a and the drive shaft 15a at an axial end of the rotor shaft 11a or at a coolant inlet region C1 respectively. In particular, the coolant is sprayed into the gap B in a contactless manner, i.e. without the use of a sealing.

The annular gap B comprises an outer border surface D on the inner side of the hollow rotor shaft 11a, wherein the outer border surface D axially extends from the (right) axial end of the rotor shaft 11a or the coolant inlet region C1 to a distant region C2 and wherein the outer border surface D is radially more outwards at the distant region C2 than at the coolant inlet region C1. For this reason, the axial bore in this example comprises a conical section extending from the axial end of the rotor shaft 11a. In other words, the outer border surface D opens conically from the coolant inlet region C1 to the distant region C2.

Moreover, in this example, the rotor shaft 11a comprises one or more radial bores 17, which connect the axial bore of the hollow rotor shaft 11a with an interior space E of the electric machine 2. In more detail, the one or more radial bores 17 start at the distant region C2 and exit to an interior space E within the electric machine 1, in which interior space E the stator 7 and the rotor 10 are arranged. Beneficially, the radial bores 17 at their exit to the interior space E are directed to the rotor winding head 13 and/or the stator winding head 9 of the electric machine 1 like this is the case in Fig. 1.

Finally, the electric machine 2 (in more detail, the rotor cooling system 16a) comprises a first coolant channel 18a which runs around the drive shaft 15a and which comprises nozzles or bores 19 directed to the gap B or to the coolant inlet region C1 respectively. The first coolant channel 18a is located out of the drive shaft 15a axially spaced from the axial end of the rotor shaft 11a. In particular, the first coolant channel 18a can be annular.

The function of the electric drive unit 1 now is as follows:
To cool the rotor 10, a coolant is sprayed into the gap B by the rotor cooling system 16a (in detail via the first coolant channel 18a and the nozzles 19) and the coolant flows axially through the axial bore of the hollow rotor shaft 11a (from the right to the left in Fig. 1). In more detail, the coolant is pumped through the rotor cooling system 16a of the electric machine 2 causing the coolant being sprayed into the annular gap B between the rotor shaft 11a and the drive shaft 15a at the coolant inlet region C1. The axial flow F of the coolant from the coolant inlet region C1 to the distant region C2 can be caused by the pressure or velocity of the coolant and/or by rotation of the hollow rotor shaft 11a. In the latter case, the conical shape of the outer border surface D and the centrifugal force causes or supports the axial flow F of the coolant from the coolant inlet region C1 to the distant region C2.

It should be noted that the coolant used in the electric drive unit 1 is not limited to only cool the electric machine 2 but may also have a lubrication function and can be used to lubricate parts of the electric machine 2. In particular, the coolant may be or comprise oil.

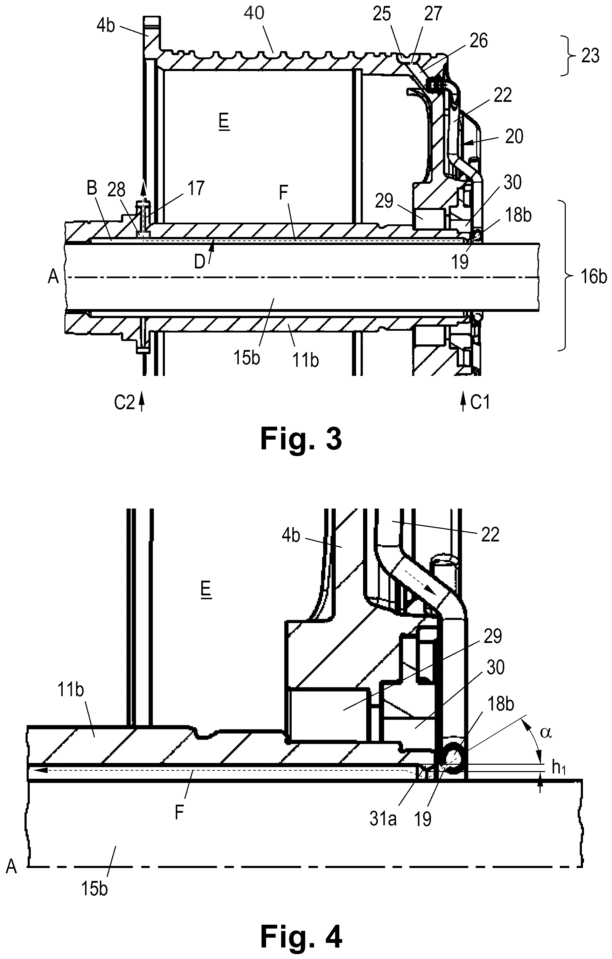

Figs. 2 shows a more detailed embodiment of a stator housing 4b with a rotor pipe arrangement 20 in oblique view. Fig. 3 shows a sectional view of an arrangement, comprising the stator housing 4b with the rotor pipe arrangement 20 depicted in Fig. 2, a hollow rotor shaft 11b and a drive shaft 15b. In addition, Fig. 4 shows a detailed view of Fig. 3. It should be noted that the stator housing 4b is pot shaped here so that the second bearing shield 6 can be omitted.

In this embodiment, the rotor cooling system 16b comprises the rotor pipe arrangement 20, wherein the first coolant channel 18b is formed by an annular pipe 21. The rotor cooling system 16b moreover comprises a second coolant channel or a connecting pipe 22, by which the rotor cooling system 16b is connected to a stator cooling system 23. The stator cooling system 23 comprises a water-carrying stator coolant channel 40, which in this example helically runs around the rotor axis or stator axis A. However, the stator coolant channel 40 may also run in another way. One should note that the stator housing 4b in this example has a closing outer shell (not shown), which closes the stator coolant channel 24.

In addition, the stator cooling system 23 comprises an annular third coolant channel 24 whose primary function is to supply coolant to nozzles (not shown) which are directed at the stator winding heads 9. The third coolant channel 24 is fluidically separated from the stator coolant channel 40, as the two coolant channels 24, 40 carry different types of coolant (e. g. oil / water). The third coolant channel 24 comprises an oil inlet 25, from which a connecting channel 26 leads to the connecting pipe 22. In this way, the third coolant channel 24 is hydraulically connected to the annular channel 18b of the rotor cooling system 16b. So, a coolant pumped through the third coolant channel 24 and the connecting pipe 22 also reaches the rotor cooling system 16b and is sprayed there into the gap B by the nozzles 19. An optional balancing element or narrowing 27 may be provided to balance or control a coolant flow from the third coolant channel 24 into the second coolant channel 22.

Concluding, the rotor cooling system 16b shown in Figs 2 to 4 comprises a second coolant channel 22 which connects the first coolant channel 18b with a third coolant channel 24 arranged in a stator housing 4b of the stator 7. The first coolant channel 18b and the second coolant channel 22 are each formed by a pipe, wherein the pipe is at least partially arranged outside the stator housing 4b.

In addition, Fig. 3 shows an annular groove 28 at the distant region C2, from which groove 28 the at least one radial bore 17 starts. Further on, Fig. 3 shows a bearing seat 29 for the bearing 14a and a sealing ring seat 30 for an optional sealing ring.

Moreover, Fig. 4 in this example shows that the nozzles 19 have an angular orientation with respect to the rotation axis A of the rotor shaft 11b and the drive shaft 15b and are directed inwards onto the rotor shaft 11b. In detail, there is the angle α of the fluid jet. By this measure, the coolant is sprayed onto the drive shaft 15b and may be transferred from there to the rotor shaft 11b by rotation of the drive shaft 15b, i.e. by the centrifugal force acting on the coolant then.

One should also note that the outer border surface D of the annular gap B on the inner side of the hollow rotor shaft 11b is not conical but cylindrical in this example. To hinder the coolant flowing out of the (right) axial end of the rotor shaft 11a or coolant inlet region C1, the axial bore in this example comprises an optional annular narrowing 31a positioned at the axial end of the rotor shaft 11b or at a coolant inlet region C1 respectively. In other words, the outer border surface D comprises a first annular step 31a at the coolant inlet region C1 opening from the coolant inlet region C1 to the distant region C2. In particular, a height h₁ of the first annular step 31a may be in a range of 0.5 mm to 2.0 mm.

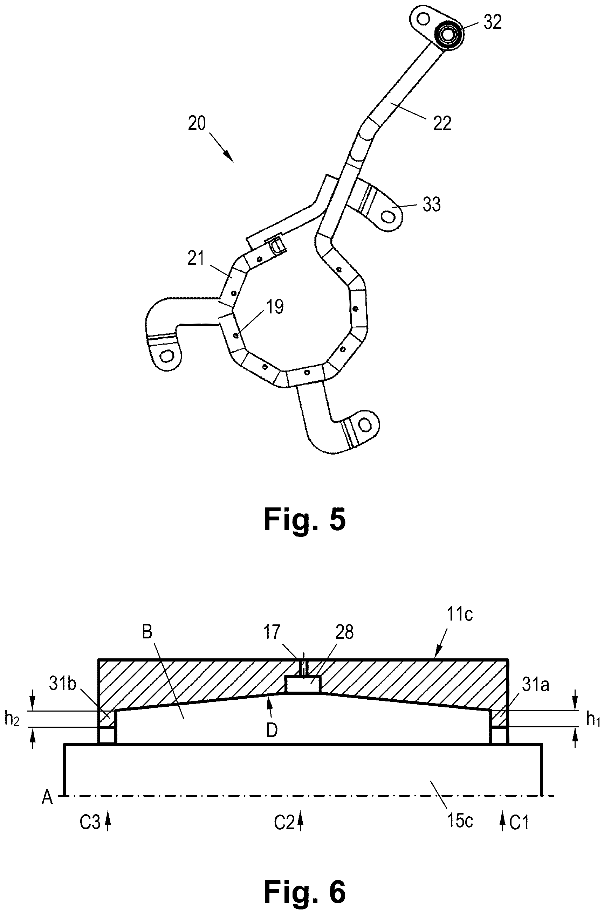

Additionally, Fig. 5 shows the rotor pipe arrangement 20 depicted in Figs. 2 to 4 from the back side. Fig. 5 particularly shows that the annular pipe 21 not is bound to a circular shape but may have a polygonal shape. Moreover, Fig. 5 shows a connector 32 for connecting the connecting pipe 21 to the connecting channel 26 and mounting tabs 33 for mounting the rotor pipe arrangement 20 to the stator housing 4b.

Fig. 6 shows a schematic sectional view of another embodiment of a rotor shaft 11c and a drive shaft 15c. In this embodiment, the gap B extends from the first right axial end of the rotor shaft 11c to its second left axial end. In other words, the annular gap B comprises an end region C3 axially vis-à-vis of the coolant inlet region C1, wherein the outer border surface D axially extends further from the distant region C2 to the end region C3. The outer border surface D is radially more outwards at the distant region C2 than at the end region C3. That means that the axial bore may comprise an additional annular narrowing 31b positioned at the second left axial end of the rotor shaft 11c and/or the axial bore may comprise a second conical section. In other words, the outer border surface D may comprise a second annular step 31b at the end region C3 opening from the end region C3 to the distant region C2 and/or the outer border surface D may be conical opening from the end region C3 to the distant region C2. Beneficially, a height h₂ of the second annular step 31b can be in a range of 0.5 mm to 2.0 mm, too.

It should be noted at this point that the axial bore may comprise one ore more annular narrowings to hinder the coolant flowing out of the rotor cooling system 16a, 16b. For the same reason, the axial bore additionally or alternatively may comprise one or more conical sections. However, the use of an annular narrowing and a conical section is no necessary condition, but the axial flow F may purely be caused by the pressure or velocity of the coolant exiting at the nozzles 19.

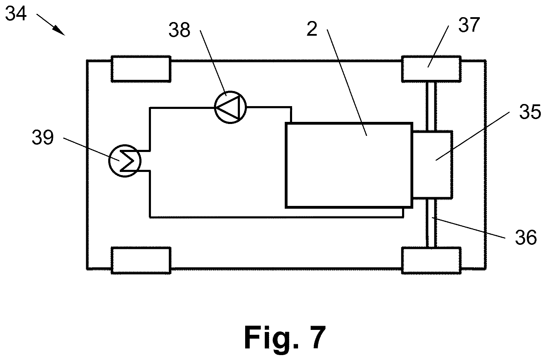

Fig. 7 finally shows an electric vehicle 34 with an electric machine 2 of the kind as defined hereinbefore, which is provided to propel the electric vehicle 34. In detail, the electric machine 2 is coupled to a gearbox 35, side shafts 36 and finally to the wheels 37. The electric machine 2 may be provided for powering the electric vehicle 34 permanently in a pure electric car or intermittently, e.g. in combination with a combustion engine in a hybrid car. The gearbox 35 may comprise the drive shaft 15a..15c running through the hollow shaft 11a..11c of the electric machine 2. The drive shaft 15a..15c of the gearbox 35 and the electric machine 2 are parts of the electric drive 1 then. However, in this case, the electric machine 2 beneficially is turned by 90° in Fig. 7.

Further on, the electric vehicle 34 comprises a coolant pump 38 and a cooler 39, which together with the rotor cooling system 16a, 16b and the stator cooling system 23 are part of a cooling circuit of the vehicle 34. In this way, the coolant can cool the stator 7 and the rotor 10 of the electric machine 2.

It is also noted that the invention is not limited to the embodiments disclosed hereinbefore, but combinations of the different variants are possible. In reality, the electric drive unit 1, the electric machine 2 and the electric vehicle 34 may have more or less parts than shown in the figures. It is also noted that the electric drive unit 1, the electric machine 2 and the electric vehicle 34 or parts thereof are not necessarily drawn to scale in the Figs. Moreover, the description may comprise subject matter of further independent inventions.

Finally, it should be noted that the term "comprising" does not exclude other elements and the use of articles "a" or "an" does not exclude a plurality. Also elements described in association with different embodiments may be combined. It should also be noted that reference signs in the claims should not be construed as limiting the scope of the claims.

### List of References

- 1: electric drive unit
- 2: electric machine
- 3: machine housing
- 4a, 4b: stator housing
- 5: first bearing shield

- 6: second bearing shield
- 7: stator
- 8: stator lamination stack
- 9: stator winding head
- 10: rotor

- 11a..11c: hollow rotor shaft
- 12: rotor lamination stack
- 13: rotor winding head
- 14a, 14b: bearing
- 15a..15c: drive shaft

- 16a..16c: rotor cooling system
- 17: radial bore
- 18a, 18b: first coolant channel / annular channel
- 19: bore or nozzle
- 20: rotor pipe arrangement

- 21: annular pipe
- 22: connecting pipe
- 23: stator cooling system
- 24: third coolant channel
- 25: oil inlet
- 26: second coolant channel / connecting channel
- 27: balancing element / narrowing
- 28: annular groove
- 29: bearing seat
- 30: sealing ring seat

- 31a, 31b: annular narrowing / step
- 32: connector
- 33: mounting tab
- 34: vehicle
- 35: gear

- 36: side shaft
- 37: wheel
- 38: coolant pump
- 39: cooler / heat exchanger
- 40: stator coolant channel

- A: stator axis / rotor axis
- B: annular gap
- C1: (first) axial end / coolant inlet region
- C2: distant region
- C3: second axial end / end region
- D: outer border surface of annular gap
- E: interior space
- F: axial flow
- h₁, h₂: height of the annular step
- α: angle of fluid jet

## Claims

1. Electric drive unit (1), comprising
- an electric machine (2) with a stator (7) and a rotor (10) which comprises a hollow rotor shaft (11a..11c),
- a drive shaft (15a..15c) running through an axial bore of the rotor shaft (11a..11c), and
- a rotor cooling system (16a..16c) designed to spray a coolant into a gap (B) between the rotor shaft (11a..11c) and the drive shaft (15a..15c) at an axial end (C1) of the rotor shaft (11a..11c).

2. Electric drive unit (1) according to claim 1, wherein the axial bore comprises an annular narrowing (B) positioned at the axial end (C1) of the rotor shaft (11a..11c).

3. Electric drive unit (1) according to claim 1 or 2, wherein the axial bore comprises a conical section.

4. Electric drive unit (1) according to one of the previous claims, wherein the rotor shaft (11a..11c) comprises a radial bore (17) which connects the axial bore with an interior space (E) of the electric machine (2).

5. Electric drive unit (1) according to claim 4, wherein the axial bore comprises an annular groove (28) from which the radial bore starts (17).

6. Electric drive unit (1) according to one of the previous claims, wherein the rotor cooling system (16a..16c) comprises a first coolant channel (18a, 18b) which runs around the drive shaft (15a..15c) and comprises nozzles (19) directed to the gap (B).

7. Electric drive unit (1) according to claim 6, wherein the first coolant channel (18a, 18b) is annular.

8. Electric drive unit (1) according to claim 6 or 7, wherein the rotor cooling system (16a..16c) comprises a second coolant channel (26) which connects the first coolant channel (18a, 18b) with a third coolant channel (24) arranged in a stator housing (4a, 4b) of the electric machine (2).

9. Electric drive unit (1) according to claim 8, wherein the first coolant channel (18a, 18b) and/or the second coolant channel (26) are each formed by a pipe (21, 22).

10. Electric drive unit (1) according to claim 9, wherein the pipe (21, 22) is at least partially arranged outside the stator housing (4a, 4b) of the electric machine (2).

11. Electric drive unit (1) according to one of the claims 8 to 10, wherein the third coolant channel (24) comprises a balancing element (27) designed to balance a coolant flow from the third coolant channel (24) into the second coolant channel (26).

12. Vehicle (34) with an electric drive unit (1) according to one of the previous claims, wherein the electric machine (2) is provided to propel the vehicle (34).

13. Method of cooling an electric drive unit (1) according to one of the claims 1 to 11, wherein a coolant is sprayed into the gap (B) by the rotor cooling system (16a..16c) and the coolant flows axially in the axial bore.
